# EUROPÄISCHE PATENTSCHRIFT

(11) **EP 1 149 295 B1**
(45) Veröffentlichungstag und Bekanntmachung des Hinweises auf die Patenterteilung: **09.04.2003**
(21) Anmeldenummer: 00904843.0
(22) Anmeldetag: 18.01.2000
(51) Int. Cl.: G01R 31/30, G06F 11/00

(54) **STEUERGERÄT ZUR STEUERUNG SICHERHEITSKRITISCHER ANWENDUNGEN**
CONTROL DEVICE FOR CONTROLLING APPLICATIONS WHICH ARE CRUCIAL TO SAFETY
DISPOSITIF DE COMMANDE POUR COMMANDER DES APPLICATIONS CRUCIALES POUR LA SECURITE

(30) Priorität: 20.01.1999 DE 19902031
(43) Veröffentlichungstag der Anmeldung: 31.10.2001
(73) Patentinhaber: ROBERT BOSCH GMBH, 70442 Stuttgart (DE)
(72) Erfinder: DOMINKE, Peter, D-74321 Bietigheim Bissingen (DE); PFEIFFER, Wolfgang, D-71723 Grossbottwar (DE); HARTER, Werner, D-75428 Illingen (DE); LINDENKREUZ, Thomas, D-72766 Reutlingen (DE)
(86) Internationale Anmeldenummer: DE0000157
(87) Internationale Veröffentlichungsnummer: WO00043797

(56) Entgegenhaltungen:
- EP-A- 0 322 141
- DE-A- 3 639 065
- DE-A- 4 305 288
- DE-A- 19 611 520
- US-A- 5 436 837
- E. BOHL ET AL.: "THE FAIL-STOP CONTROLLER AE11" INTERNATIONAL TEST CONFERENCE, 1. November 1997 (1997-11-01), Seiten 567-577, XP002138755 washington, dc, usa

## Beschreibung

Die vorliegende Erfindung betrifft ein Steuergerät zur Steuerung sicherheitskritischer Anwendungen mit einem Mikrocomputer (MC), einer Überwachungseinheit (Check Unit, CU) und Peripherieschaltungen (Input Output, IO). Die Erfindung betrifft außerdem ein Verfahren zum Überprüfen eines Mikrocomputers (MC) eines Steuergeräts zur Steuerung sicherheitskritischer Anwendungen, das den Mikrocomputer (MC), eine Überwachungseinheit (Check Unit, CU) und Peripherieschaltungen (Input Output, IO) aufweist.

### Stand der Technik

In Steuergeräten, die sicherheitskritische Anwendungen oder Funktionen steuern bzw. regeln, müssen Fehler des Mikrocomputers (MC) bzw. eines Prozessors des Mikrocomputers durch Überwachung erkannt werden. Solche Steuergeräte mit Sicherheitsaufgaben werden bspw. für Antiblockiersysteme, für Antriebsschlupfregelsysteme und/oder für Fahrdynamikregelsysteme eingesetzt. Die sicherheitskritischen Anwendungen, die von dem Steuergerät gesteuert werden, sind über die Peripherieschaltungen mit dem Steuergerät verbunden. Bei Einrechner-Steuergeräten sind Verfahren mit einem Selbsttest, Plausibilitätsüberwachung und Watch-Dog bekannt.

Zur Prüfung von CMOS-Bausteinen (integrierte Schaltkreise, IC) beim Hersteller werden Verfahren und Meßgeräte zur Messung des Ruhestromes eingesetzt. Dies ist in der Veröffentlichung zur International Test Conference von E.Böhl, Th. Lindenkreuz und R. Stephan "THE FAIL-STOP CONTROLLER AE11" (XP00213875, Washington dc, USA) von 01. November 1997 auf den Seiten 567-577 gezeigt. Der Hintergrund des darin dargestellten sog. Ruhestromtestes besteht darin, daß in einem digitalen CMOS-Baustein in rein statischer Logik fast die gesamte Verlustleistung während der Schaltvorgänge in seinem Inneren entsteht. Im Ruhezustand beschränkt sich der Stromfluß auf winzige Leckströme, sowie Ströme durch Pullup- oder Pulldown-Widerstände an den Eingängen und externe Lasten an den Ausgangs-Treibern. Viele herstellungsbedingte Fehler führen zu einer verstärkten Leitfähigkeit zwischen der positiven und negativen Versorgungsspannung. Werden solche defekten Bereiche (Punktdefekte) der Schaltung aktiviert, führt dies zu einem sprunghaften Anstieg der Stromaufnahme. Durch eine hochgenaue Messung der Stromaufnahme während des Testvorgangs und einem Vergleich mit entsprechenden Sollwerten können solche Fehler festgestellt werden. Wie schon erwähnt, macht man sich eine solche Ruhestrommessung bei der Produktion von CMOS-Bausteinen zunutze, um nach dem Herstellungsprozeß die fehlerhaften Bausteine auszusortieren.

Des Weiteren ist es bei solchen CMOS-Schaltstrukturen aus der DE 43 05 288 A1 bekannt, eine Kombination eines logischen Tests und des vorgenannten Ruhestromtests durchzuführen. Dabei wird beim logischen Test die Reaktion der Schaltung auf Teststimuli eines Eingangsregisters an den primären Ausgängen der Schaltung beobachtet. Durch die Kombination dieses logischen Tests mit dem Ruhestromtestverfahren, also der Sensierung der statischen Stromaufnahme wird eine hohe Erfassung von parametrischen Fehlern, wie Verzögerungsfehlern, hochohmigen Brückenfehlern und funktionalen Fehlern, wie Stuck-at (Haftfehler), Stuck-open (Unterbrechungsfehler) und niederohmigen Brückenfehlern erreicht.

Daneben ist in der DE 196 11 520 A1 gezeigt, das bei der Produktion von Rechnerbausteinen bekannte Ruhestrom-Testverfahren auch bei Steuergeräten der eingangs genannten Art zur Überprüfung der Rechnerbausteine während ihres Normalbetriebs einzusetzen, um die häufigsten oben genannten Fehler in den Rechnerbausteinen, insbesondere in dem Mikrocomputer (MC), bspw. Haftfehler (Stuck-at), Brückenfehler (Bridging) und/oder Unterbrechungsfehler (Stuck-Open), detektieren zu können.

Aus dem Stand der Technik ist es weiterhin bekannt, bei Steuergeräten der eingangs genannten Art zur Erhöhung der Fehlersicherheit zwei MC vorzusehen, die sich durch Parallelrechnung und/oder Plausibilitätsprüfungen gegenseitig überprüfen. Insbesondere Kostenbetrachtungen führen jedoch zu der Überlegung, bei solchen Steuergeräten lediglich einen einzigen MC zu verwenden.

Die Aufgabe der vorliegenden Erfindung besteht darin, ein Steuergerät der eingangs genannten Art dahingehend auszugestalten und weiterzubilden, daß die Zuverlässigkeit der Fehlerdetektion weiter verbessert und die Detektion auf zusätzliche Fehlerarten ausgeweitet wird.

Zur Lösung dieser Aufgabe schlägt die Erfindung ausgehend von einem Steuergerät der eingangs genannten Art vor, daß die Überwachungseinheit (CU) erste Mittel zur Messung des Ruhestroms des Mikrocomputers (MC) aufweist und zwischen den ersten Mitteln der CU und dem MC mindestens eine Handshake-Leitung zur Steuerung der Messung des Ruhestroms verläuft, und daß die CU zweite Mittel zur Beaufschlagung des MC mit einem Testdateneingangssignal, zur Verarbeitung des Testdateneingangssignals und zum Vergleich des entsprechenden Testdatenausgangssignals des MC mit dem entsprechenden Testdatenausgangssignal der CU aufweist und zwischen den zweiten Mitteln der CU und dem MC mindestens eine Testdatensignal-Übertragungsleitung verläuft.

Erfindungsgemäß ist erkannt worden, daß die Zuverlässigkeit der Fehlerdetektion erhöht werden kann, indem zwei unterschiedliche, sich gegenseitig ergänzende Testverfahren eingesetzt werden. Auf diese Weise kann auch eine wesentlich größere Anzahl von unterschiedlichen Fehlerarten der Rechenbausteine des MC detektiert werden.

Das erfindungsgemäße Steuergerät kann auch mehrere MCs und mehrere CUs aufweisen. Nachfolgend wird jedoch davon ausgegangen, daß das Steuergerät einen MC und eine CU aufweist. Die CU des erfindungsgemäßen Steuergeräts weist erste Mittel zur Messung des Ruhestroms des MC auf.

Zwischen den ersten Mitteln der CU und dem MC verläuft mindestens eine Handshake-Leitung zur Steuerung der Messung des Ruhestroms. Die Handshake-Leitung kann bspw. als eine bidirektionale Leitung ausgebildet sein.

Die Ruhestrommessung wird nach dem Einschalten des Steuergeräts für eine feste Anzahl (typischerweise 8 bis 16) von ausgewählten Befehlen im Rahmen eines Testprogramms durchgeführt. Für den Mikrocomputer TMS470 werden beispielsweise 14 ausgewählte Befehle abgearbeitet, die einen internen Maschinenzyklus enthalten.

Zur Ergänzung der Ruhestrommessung weist die CU des erfindungsgemäßen Steuergeräts zweite Mittel auf. Zwischen den zweiten Mitteln der CU und dem MC verläuft mindestens eine Testdatensignal-Übertragungsleitung.

Die zweiten Mittel beaufschlagen den MC mit einem Testdateneingangssignal. Der MC berechnet ein Testdatenausgangssignal, das von dem Testdateneingangssignal und den Zuständen im Inneren des MC abhängig ist. Fehlerhafte Zustände führen zu einem veränderten Testdatenausgangssignal des MC.

In den zweiten Mitteln der CU wird auch das Testdateneingangssignal zu einem Testdatenausgangssignal verarbeitet, das als Referenzsignal für die Überprüfung des Testdatenausgangssignals des MC dient. Bei der Berechnung des Testdatenausgangssignal geht die CU von einem fehlerfrei arbeitenden MC aus. Die durchgeführte Berechnung ist vorzugsweise sehr einfach gestaltet. Es wird nicht wie bei Parallelrechnersystemen der Mikrorechner doppelt ausgelegt und von der CU die gleiche Berechnung wie von dem MC ausgeführt. Vielmehr wird so vorgegangen, daß der MC ausgehend von den Eingangsdaten einer vorgegebenen Prüffunktion die Ausgangsdaten berechnet, deren Ergebnisse von der CU mit dem von ihr berechneten Referenzsignal überprüft werden. Die zur Berechnung der Ausgangsdaten verwendete Prüffunktion ist in der Regel sehr einfach gestaltet, sie erfordert nur eine sehr geringe Rechenzeit. Es können aber auch komplexe Tests und Ergebnisse von den Anwendungsprogrammen in diese Prüffunktion mit einbezogen werden.

Schließlich wird das Testdatenausgangssignal der CU mit dem Testdatenausgangssignal des MC verglichen. Weichen sie voneinander ab oder überschreitet die Abweichung einen vorbestimmten Schwellenwert, erkennt die CU einen Fehler des MC. Das Testergebnis kann mittels einer Anzeigevorrichtung zur Anzeige gebracht werden und/oder es kann vorgesehen sein, daß beim Auftreten eines Fehlers eine Abschaltung des durch das Steuergerät geregelten und/oder gesteuerten Systems vorgesehen ist.

Gemäß einer vorteilhaften Weiterbildung der Erfindung wird vorgeschlagen, daß die ersten Mittel eine IDDQ-Meßschaltung, eine Spannungsversorgung, eine IDDQ-Meßablaufsteuerung (MAS) und eine Steuerung der CU umfassen und daß die Verbindung zwischen den ersten Mitteln und dem MC zwei Handshake-Leitungen, die von der IDDQ-MAS zu dem MC verlaufen, und mindestens eine Spannungsversorgungsleitung, die von der Spannungsversorgung zu dem MC verlaufen, umfaßt, wobei zumindest eine der Spannungsversorgungsleitungen über die IDDQ-Meßschaltung verläuft. Mit IDD wird bei Halbleitern der positive Versorgungsstrom bezeichnet. IDDQ ist eine Bezeichnung des Ruhestroms. Die Handshake-Leitungen sind bspw. als STARTund als END-Handshake-Leitungen zum Einleiten bzw. zum Rückmelden des Abschlusses des Funktionstests ausgebildet.

Die Kommunikation zwischen dem MC und der CU zur Messung des Ruhestroms erfolgt über die zwei Handshake-Leitungen.

Die Messung des Ruhestroms des MC durch die CU erfolgt über die separaten Spannungsversorgungsleitungen.

Wie erwähnt, betrifft die Erfindung ein Steuergerät mit einer Überwachungseinheit zum Test des Mikrocomputers des Steuergeräts. Zur Spannungsversorgung des Steuergeräts und damit auch des Mikrocomputers ist eine Spannungsversorgungseinheit vorgesehen. Die Steuereinheit der CU enthält Mittel, die den MC in bestimmte Betriebszustände überführen können. Weiterhin sind in der IDDQ-Meßschaltung Meßmittel vorhanden, die den Strom oder die Spannung im Spannungsversorgungskreis des MC erfassen, woraufhin in Vergleichsmitteln, die ebenfalls in der IDDQ-Meßschaltung vorhanden sind, der erfaßte Strom oder die erfaßte Spannung mit wenigstens einem vorgegebenen Schwellenwert verglichen wird.

Mit der IDDQ-Messung können durch eine einfache Strom- bzw. Spannungsmessung eine Vielzahl von möglichen Fehlern im Rechner erfaßt werden. Dabei kann mit wenigen Testschritten eine hohe Abdeckung der häufigsten Fehler in den Bauteilen eines MC erreicht werden. Solche Fehler können Haftfehler (Stuck-at), Brückenfehler (Bridging) und/oder Unterbrechungsfehler (Stuck-Open) sein.

Die Kombination der Ruhestrommessung mit einem geeigneten anderen Überprüfungsverfahren, insbesondere mit einer Überprüfung der Funktion des MC anhand von Testdatensätzen, ergibt eine insbesondere für sicherheitskritische Anwendungen vorteilhafte breite Fehlerabdeckung bezüglich der wesentlichen Fehler bei Rechnerbausteinen, insbesondere bei CMOS-Prozessoren.

Die oben erwähnte Einsparung des zweiten Prozessors bleibt als wirtschaftlicher Vorteil bei dem erfindungsgemäßen Steuergerät weitgehend erhalten, da die erfindungsgemäße Ruhestrommessung nur wenig Hardware-Aufwand erfordert.

Die IDDQ-MAS überführt vorgegebene Teile des MC durch eine spezielle Ansteuerung des MC in einen Zustand geringen Stroms. Der Hintergrund dieser Ansteuerung besteht darin, daß im MC meist Bauteile vorhanden sind, die einen relativ hohen Strom benötigen. Da, wie eingangs erwähnt, die Ruhestrommessung im allgemeinen auf Schwankungen des Ruhestroms innerhalb relativ geringer Bandbreiten basiert, stören die Bauteile des MC mit hoher Stromaufnahme die IDDQ-Messung. Insbesondere ist vorgesehen, daß solche Bauteile in den Zustand geringen Stromes überführt werden, auf die sich die IDDQ-Messung nicht bezieht. Solche Bauteile können die MC-Endstufe und/oder eine Eingangsstufe (beispielsweise Analog/Digital-Wandler) sowie Schaltungen zur internen Taktvervielfachung sein. Im einfachsten Fall werden die Bauteile mit hoher Stromaufnahme während des Tests abgeschaltet. Es werden also interne Schaltungsteile und -ausgänge, die hohe Ströme führen, abgeschaltet. Danach kann die Messung des Ruhestroms vorgenommen werden.

Über die oben erwähnte Abschaltung der Bauteile des MC mit hohem Strom hinaus kann auch vorgesehen sein, daß der Kern des MC in einen Zustand geringer Stromaufnahme zu überführen ist. Bei solchen speziell für die Ruhestrommessung ausgelegten MC-Bausteinen ist ein spezieller Betriebszustand, ein sog. IDDQ-Testmode vorgesehen. In diesem Betriebszustand werden alle rechnerinternen Ströme ausgeschaltet, d. h. der Strom im MC-Kern wird minimiert. Das IDDQ-Design ist derart, daß sich Standardfehler im MC-Kern in einer Erhöhung des Ruhestroms bemerkbar machen. So äußern sich beispielsweise Kurzschluß- bzw. Haftfehler- (Kurzschluß nach Masse oder Versorgungsspannung) sofort in einer Erhöhung des Ruhestromes. Es ist hierbei nicht notwendig, die Auswirkung eines solchen Fehlers bis auf die Ausgänge des MC weiterzuleiten (zu propagieren). Die erhöhte Stromaufnahme ist der sofortige Fehlerindikator.

Neben dem oben beschriebenen IDDQ-Testmode kann vorgesehen sein, daß nur die Bauteile des MC mit hohem Strom abgeschaltet werden und der MC auf einen Befehl hin in einen definierten Zustand mit niedrigem Strom übergeht. Dabei braucht der MC-Kern nicht speziell für den IDDQ-Testmode ausgelegt zu sein. Dies wird als Power-Down-Mode bezeichnet.

Der Power-Down-Mode wird eingeleitet, indem rechnerinterne Teile wie Register und Speicher mit bestimmten Mustern geladen werden und die oben erwähnten Rechnerbauteile in den Zustand geringer Stromaufnahme überführt werden, bspw. durch Ausführung eines bestimmten Rechnerbefehls. Ist dieser Zustand erreicht, so kann wahlweise ein Zeittaktgeber ausgeschaltet bzw. abgetrennt werden. Anschließend wird der Ruhestrom oder ein entsprechender Spannungswert gemessen und mit einem Schwellenwert verglichen, der dem oben eingestellten Betriebszustand (Power-Down-Zustand) des MC-Kerns entspricht. Sind im Rechner bestimmte Fehler vorhanden (Haftfehler, Brückenfehler, Unterbrechungen), so führt dies meist zu einer Erhöhung des Ruhestroms beziehungsweise des durch den Ruhestrom verursachten Spannungsabfalls.

Nach einem solchen Testschritt können weitere Testschritte folgen, indem zunächst der Power-Down-Mode durch Anlegen von bestimmten Signalpegeln an bestimmte Anschlüsse des MC verlassen wird. Durch ein erneutes Starten bzw. Zuschalten des Zeittaktgebers werden die rechnerinternen Teile wie Register und Speicher mit weiteren Mustern geladen und es werden wiederum die oben erwähnten Bauteile in den Zustand geringen Stroms überführt, bspw. durch Ausführen eines bestimmten Rechnerbefehls (Power-Down-Befehl). Daran schließt sich wiederum die oben beschriebene Messung des Ruhestromes an. Durch mehrere solcher hintereinander ausgeführter Messungen des Power-Down-Stroms gelangt man zu einer immer vollständigeren Fehlererfassung von Registern, Speichern und Teilen des Rechnerkerns.

Die einzelnen Testschritte werden je nach Rechnertyp und Ausführung der Schaltung durch eine Wiederfreigabe des Zeittaktgebers, einer Reset-Auslösung oder einer Auslösung eines externen Interrupts beendet. Nach dem letzten Testschritt wird der MC wieder in seinen normalen Betriebsmodus betrieben (Normalbetrieb).

Neben der oben beschriebenen Ruhestrommessung im Power-Down-Mode ist auch erfindungsgemäß eine Messung des Ruhestroms in dem erwähnten IDDQ-Testmode vorgesehen, sofern der zu testende Rechner dafür ausgelegt ist. Der Eintritt des IDDQ-Testmodes wird bspw. durch Verändern des Signalpegels an einem Anschluß des MC eingeleitet. Auch hierbei werden vor Eintritt in den IDDQ-Testmode Register und Speicher mit bestimmten Mustern geladen. Mit Eintritt des IDDQ-Testmodes werden die Rechnerteile mit hoher Stromaufnahme abgeschaltet. Darüber hinaus kann der Rechnerkern durch Anhalten bzw. Abkoppeln des Zeittaktes während der Ausführung eines Befehls in einem für diesen Befehl typischen Zustand gehalten werden. Diese Befehle sind derart ausgewählt, daß sie die Zustände der internen Schaltungsknoten des Rechnerkerns so einstellen, daß möglichst viele Fehler über die Ruhestrommessung detektiert werden können.

Der Handshake für die Ruhestrommessung erfolgt in mehreren Schritten:
- S1:: Der MC setzt das START-Signal auf HIGH. Damit weiß die CU, daß eine IDDQ-Messung beginnt.

- S2:: Wahlweise kann der MC das Anhalten des Zeittakts (Master Clock, MCLK) vorbereiten, indem er durch einen internen Befehl ein Signal PREP auf LOW setzt.
- S3:: Der MC dekodiert den genau definierten Zeitpunkt innerhalb des nächsten geeigneten Befehls für den IDDQ-Test und setzt ein Signal DEKOD ebenfalls auf LOW. Jetzt wird die MCLK gleich LOW und der Digitalteil des MC ist für die IDDQ-Messung auf statischen Betrieb eingestellt.
- S4:: Die CU führt die IDDQ-Messung durch.
- S5:: Die CU gibt die Pegelfolge LOW-HIGH-LOW am Signal END aus und aktiviert damit wieder die MCLK.
- S6:: Der MC wird wieder aktiv und bestätigt das Ende der Messung durch Setzen des START-Signals auf LOW. Der MC setzt das Programm fort und bereitet die nächste IDDQ-Messung vor oder beendet die IDDQ-Messungen, wenn alle Messungen durchgeführt sind.

Vorzugsweise verlaufen zwischen der Spannungsversorgung und dem MC zwei Spannungsversorgungsleitungen, wobei eine Spannungsversorgungsleitung über die IDDQ-Meßschaltung verläuft. Über die Spannungsversorgungsleitung, die über die IDDQ-Meßschaltung verläuft, wird der Ruhestrom des MC gemessen.

Gemäß einer anderen vorteilhaften Weiterbildung des erfindungsgemäßen Steuergeräts wird vorgeschlagen, daß die ersten Mittel eine IDDQ-Meßschaltung, eine Spannungsversorgung, eine IDDQ-Meßablaufsteuerung (MAS) und eine Steuerung der CU umfassen und daß die Verbindung zwischen den ersten Mitteln und dem MC vier Handshake-Leitungen die von der IDDQ-MAS zu dem MC verlaufen, und mindestens eine Spannungsversorgungsleitung, die von der Spannungsversorgung zu dem MC verlaufen, umfaßt, wobei zumindest eine der Spannungsversorgungsleitungen über die IDDQ-Meßschaltung verläuft. Bei vier Handshake-Leitungen können zusätzlich zu den Leitungen START, END bei zwei Handshake-Leitungen noch eine Zeittakt (CLK)-Leitung und eine Leitung für eine Power-Down (PWRDN)-Ansteuerung für den MC vorgesehen werden. Bei dieser Ausführungsform des Steuergeräts genügt eine gemeinsame Spannungsversorgungsleitung zum Prozessor, in der der Ruhestrom gemessen wird. Das Anhalten des Zeittaktgebers erfolgt dann in der CU. Die Ansteuerung von Spannungsversorgungsschaltern für Analog- und IO-Schaltungen im MC erfolgt durch die PWRDN-Leitung aus der CU. Somit fließt im Meßfall nur der Ruhestrom des Digitalteils des MC über die gemeinsame Spannungsversorgungsleitung.

Vorteilhafterweise weisen die ersten Mittel eine Initialisierungsschaltung auf, die nach dem Einschalten des Steuergeräts von der Spannungsversorgung ein Initialisierungssignal erhält und danach zur Freigabe der IDDQ-Messung ein Freigabe-Signal an die IDDQ-MAS sendet. Der erfolgreiche Abschluß der IDDQ-Messung wird durch ein weiteres Signal an die Steuerung der CU signalisiert. Die CU schaltet daraufhin den Testablauf weiter, indem die Initialisierungsschaltung über ein weiteres Signal den Testdatensignalgenerator freigibt.

Gemäß einer vorteilhaften Ausführungsform der vorliegenden Erfindung weisen die zweiten Mittel einen Testdatensignalgenerator zur Beaufschlagung des MC mit einem Testdateneingangssignal, einen Antwortgenerator zur Verarbeitung des Testdateneingangssignals und zur Bildung eines entsprechenden Testdatenausgangssignals, ein Testdatenregister zum Senden und Empfangen der Testdaten und einen Vergleicher zum Vergleich des Testdatenausgangssignals des MC mit dem Testdatenausgangssignal der CU umfassen und daß die Verbindung zwischen den zweiten Mitteln und dem MC mindestens eine Testdatenübertragungsleitung umfasst, die zwischen dem Testdatenregister und dem MC verlaufen. Vorteilhafterweise verlaufen zwichen dem Testdatenregister und dem MC zwei Testdatenübertragungsleitungen.

Auch der Testdatensignalgenerator wird durch die Initialisierungsschaltung nach dem Einschalten des Steuergeräts aktiviert. Im Testdatensignalgenerator werden die Testdaten für den MC in einer quasi-zufälligen Reihenfolge durch ein rückgekoppeltes Schieberegister generiert. Zu jedem Testdateneingangssignal wird in dem Antwortgenerator mit Hilfe des Reed-Muller-Codes die Bitfolge für das Testdatenausgangssignal (das sog. Referenzsignal) gebildet. Dieser Code wird angewendet, um einen größtmöglichen Abstand im Zahlenraum der Testdatenausgangssignale (Hamming-Distanz) zu erhalten. Im Vergleicher wird dann das theoretisch berechnete Testdatenausgangssignal aus dem Antwortgenerator der CU mit dem tatsächlichen Testdatenausgangssignal des MC aus dem Testdatenregister verglichen.

Die zweiten Mittel weisen vorzugsweise einen Triggergenerator auf, der den Zeitpunkt ermittelt, zu dem das Testdatenausgangssignal des MC bei fehlerfreiem MC an dem Vergleicher anliegt. Der Triggergenerator gibt den Zeitpunkt des Vergleichs des ermittelten Testdatenausgangssignals des MC mit der tatsächlichen Antwort des CU vor. Dadurch wird sichergestellt, daß die Zeitscheiben in dem MC richtig ablaufen. Der Vergleicher prüft das Testdatenausgangssignal nicht nur auf den richtigen Datenwert hin, sondern auch, ob das Testdatenausgangssignal innerhalb eines bestimmten Zeitfensters übertragen wird.

Vorteilhafterweise weisen die zweiten Mittel einen Fehlerzähler auf, der hoch- oder runterzählt, falls das Testdatenausgangssignal des MC nicht mit dem Testdatenausgangssignal der CU übereinstimmt und/oder falls das Testdatenausgangssignal des MC zu einem anderen als zu dem von dem Triggergenerator ermittelten Zeitpunkt an dem Vergleicher anliegt. Der Vergleicher bewirkt durch einen Zählimpuls das Hoch- oder Runterzählen des Fehlerzählers. Sind Wert und Zeitpunkt des Testdatenausgangssignals richtig, wird der Fehlerzähler bspw. dekrementiert. Unterschreitet der Fehlerzähler einen vorgebbaren Wert, wird über ein Signalinterface bspw. eine externe Warnlampe an- oder abgeschaltet und ein Relais zum Manipulieren der sicherheitskritischen Anwendung freigegeben.

Die Manipulation der zu steuernden Anwendung wird sich in der Regel auf ein Abschalten der Anwendung beschränken. Bei besonderen Anwendung kann es jedoch sinnvoll sein, daß der Fehlerzähler mehrere Ansprechschwellen hat, deren Überschreiten jeweils eine unterschiedliche Reaktion zur Folge hat. Dadurch kann ein sofortiges Abschalten der Anwendung bei einer einmaligen Störung verhindert und eine Überprüfung des Abschaltpfades durch den Rechner ermöglicht werden.

Wird ein Testdateneingangssignal zum falschen Zeitpunkt oder mit einem falschen Wert durch den MC beantwortet, wird der MC mit demselben Testdateneingangssignal nochmals beaufschlagt bis der Zeipunkt und der Wert des Testdatenausgangssignals richtig sind. Tritt dies innerhalb einer vordefinierten Zeit nicht ein, schaltet die CU das Steuergerät bzw. die Anwendung ab und kann auch durch richtige Antworten nicht mehr aktiviert werden.

Die zweiten Mittel weisen vorzugsweise eine Initialisierungsschaltung auf, die nach dem Einschalten des Steuergeräts von der Spannungsversorgung ein Initialisierungssignal erhält, danach die CU mit dem MC synchronisiert und danach den Testdatensignalgenerator und den Fehlerzähler aktiviert. Die CU wird mit dem MC synchronisiert, indem die CU auf die ersten Datenübertragung des MC wartet.

Eine weitere Aufgabe der vorliegenden Erfindung besteht darin, ein Verfahren zum Überprüfen eines Mikrocomputers der eingangs genannten Art dahingehend auszugestalten und weiterzubilden, daß die Zuverlässigkeit der Fehlerdetektion weiter verbessert und die Detektion auf zusätzliche Fehlerarten ausgeweitet wird.

Zur Lösung dieser Aufgabe schlägt die Erfindung ausgehend von dem Verfahren der eingangs genannten Art vor, dass die CU des Steuergeräts
- eine Messung des Ruhestroms des MC durchführt und
- den MC mit einem Testdateneingangssignal beaufschlagt
- ein erstes Testdatenausgangssignal bestimmt und
- ein zweites Testdatenausgangssignal des MC mit dem ersten Testdatenausgangssignal der CU vergleicht.

Vorteilhafterweise ist die Ruhestrommessung als eine IDDQ-Messung ausgebildet. Vorzugsweise wird die IDDQ-Messung nach dem Einschalten des Steuergerätes nach der Freigabe durch ein Freigabesignal durchgeführt.

Gemäß einer vorteilhaften Weiterbildung des erfindungsgemäßen Verfahrens wird der Vergleich des zweiten Testdatenausgangssignals des MC mit dem ersten Testdatenausgangssignal der CU während des Betriebs des Steuergeräts durchgeführt. Das hat den Vorteil, daß das Steuergerät nicht abgeschaltet werden muß, um die Funktion des Mikrocomputers überprüfen zu können. Vielmehr können während des Betriebs des Steuergeräts nicht zur Steuerung der Anwendung genutzte Rechenkapazitäten des MC zur Überprüfung des MC genutzt werden.

Vorzugsweise wird während des Betriebs des Steuergeräts in regelmäßigen Abständen einmalig ein falsches Testdatenausgangssignal an die CU ausgegeben, um die Funktion des Abschaltpfades zu überprüfen.

Eine weitere vorteilhafte Ausgestaltung der Erfindung geht davon aus, daß während der IDDQ-Messung und/oder während des Vergleichs des zweiten Testdatenausgangssignals des MC mit dem ersten Testdatenausgangssignal der CU ein Zeittaktgeber durch den MC angehalten wird. Der Zeittaktgeber ist in der Steuerung der CU vorgesehen. Abhängig von den Ausgangssignalen dieses Zeittaktgebers werden insbesondere die rechnerinternen Vorgänge gesteuert. Bei dem beschriebenen IDDQ-Testmode ist vorgesehen, daß dieser Zeittaktgeber aus- oder abgeschaltet bzw. von dem MC abgetrennt wird. Dies kann auch beim Power-Down-Mode realisiert sein, wenn ein besonders niedriger Ruhestrom erzielt werden soll. Diese Aus- oder Abschaltung bzw. das Abtrennen des Zeittaktgebers geschieht insbesondere zu Beginn einer jeden Ruhestrommessung.

Vorzugsweise wird das Testdateneingangssignal der CU von einem Testdatensignalgenerator durch ein rückgekoppeltes Schieberegister generiert. Vorteilhafterweise wird das Testdatenausgangssignal der CU von einem Antwortgenerator mit Hilfe des Reed-Muller-Codes generiert.

Das erfindungsgemäße Steuergerät kann mittels zweier unterschiedlicher Testabläufe überprüft werden. Ein sog. Startup-Test wird unmittelbar nach dem Einschalten des Steuergeräts und vor dem Betrieb des Steuergeräts zur Steuerung oder Regelung der sicherheitskritischen Anwendung durchgeführt. Ein sog. Online-Test wird nach dem Startup-Test während des Betriebs des Steuergeräts von Zeit zu Zeit durchgeführt.

Der Startup-Test ist in zwei Testabschnitte unterteilt, den sog. Prozessorinitialisierungs-Abschnitt (Proz-Init) und den anschließenden sog. Betriebssysteminitialisierungs-Abschnitt (BS-Init). Der Proz-Init-Abschnitt umfaßt einen Befehls- und Core-Test, einen RAM/ROM-Test und einen IDDQ-Test. Der BS-Init-Abschnitt umfaßt eine Startup-Regelung und einen Test der CU. Bei der Startup-Regelung werden dem Steuergerät verschiedene Eingangswerte vorgespielt (bspw. ein bestimmter Drehzahlverlauf der Räder eines Fahrzeugs, wie er typischerweise am Eingang eines ABS-Steuerungsgeräts des Fahrzeugs auftreten kann). Das Steuergerät führt aufgrund der Eingangswerte eine Regelung bzw. Steuerung der Anwendung durch. Das Ergebnis dieser simulierten Regelung bzw. Steuerung wird mit entsprechenden Sollwerten verglichen. Bei dem Test der CU wird ein defekter MC simuliert und die Reaktion der CU auf den Defekt überprüft.

Der Online-Test weist einen Befehls- und Core-Test, einen RAM/ROM-Test, einen Test der CU, und einen Replications-Test auf. Bei dem Replications-Test werden für bestimmte sicherheitskritische Variable doppelte Speicherplätze vorgesehen und bestimmte sicherheitskritische Berechnungen doppelt ausgeführt. Die Inhalte der doppelten Speicherplätze und die Ergebnisse der doppelten Berechnungen werden miteinander verglichen. Die redundante Speicherung und die redundante Berechnung erfolgt durch den einen Prozessor des Steuergeräts. Der Online-Test weist darüber hinaus eine Plausibilitätsüberwachung auf, bei der die von dem MC ermittelten Steuerungs- bzw. Regelungssignale auf Plausibilität überprüft werden. Bei einem ABS-Steuergerät kann bspw. überprüft werden, ob die Geschwindigkeit, die Beschleunigung oder die Verzögerung innerhalb bestimmter Grenzen liegt. Außerdem müssen die Werte der einzelnen Räder des Fahrzeugs in einer bestimmten Relation zueinander stehen, was ebenfalls überprüft werden kann. Der Online-Test weist schließlich noch einen Betriebssystem-Test und einen Test der übrigen Überwachungseinheiten des Steuergeräts auf.

Ein bevorzugtes Ausführungsbeispiel der vorliegenden Erfindung wird im folgenden anhand der Zeichnungen näher erläutert. Es zeigen:
- Fig. 1: ein schematisches Übersichtsblockschaltbild eines erfindungsgemäßen Steuergeräts;
- Fig. 2: ein detailliertes Übersichtsblockschaltbild des Steuergeräts aus Fig. 1;
- Fig. 3: eine Schaltungsanordnung für eine Ruhestrommessung mit Zweidraht-Handshake; und
- Fig. 4: Zeitdiagramm der Meßablaufsteuerung für die Ruhestrommessung aus Fig. 3.

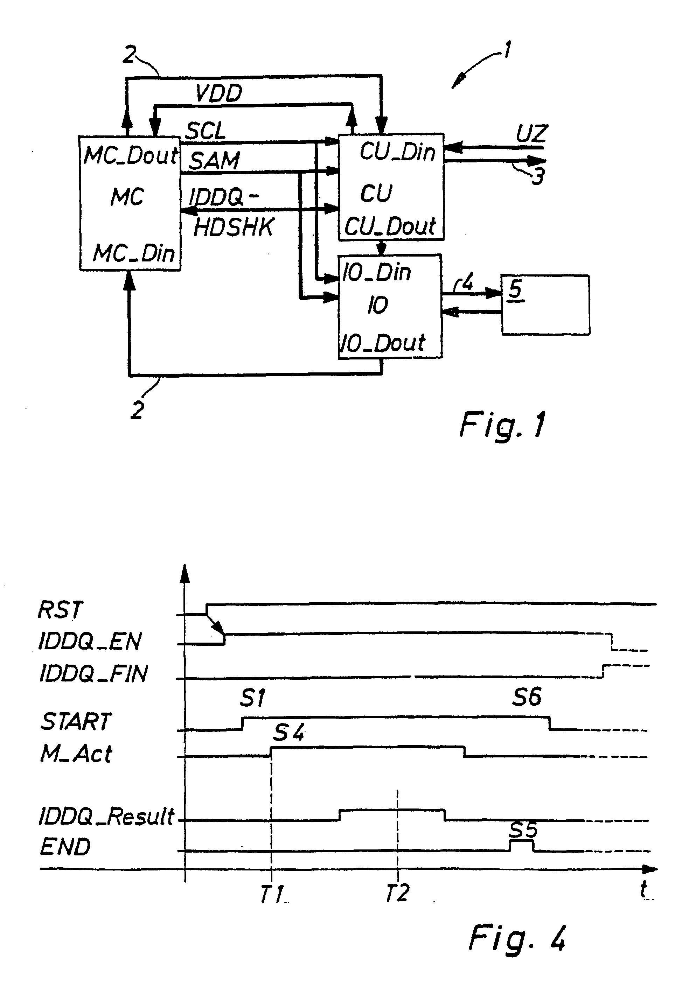

In Fig. 1 ist ein schematisches Übersichtsblockschaltbild eines erfindungsgemäßen Steuergeräts dargestellt. Das erfindungsgemäße Steuergerät ist in seiner Gesamtheit mit dem Bezugszeichen 1 gekennzeichnet. Das Steuergerät 1 dient zur Steuerung sicherheitskritischer Anwendungen, bspw. für Antiblockiersysteme, für Antriebsschlupfregelsysteme und/oder für Fahrdynamikregelsysteme. Das Steuergerät 1 weist einen Mikrocomputer MC, eine Überwachungseinheit (CU, Check Unit) und Peripherieschaltungen (IO, Input/Output). Der Mikrocomputer MC, die Überwachungseinheit CU und die Peripherieschaltungen IO sind über einen seriellen synchronen Datenbus 2 in Serie geschaltet. Der Mikrocomputer MC sendet über seine Datenausgabeleitung MC_Dout die Datenausgangssignale über den Datenbus 2 an die Busteilnehmer und empfängt gleichzeitig die Dateneingangssignale über seine Dateneingabeleitung MC_Din.

Mit dem Signal SAM (Sample) speichern die Busteilnehmer die in ihren Speicherregistern angekommenen Daten ab.

Zwischen dem Mikrocomputer MC und der Überwachungseinheit CU bestehen weitere Verbindungsleitungen, nämlich eine gemeinsame Versorgungsleitung VDD oder wahlweise mehrere Versorgungsleitungen VDD für eine digitale und analoge Versorgung des Mikrocomputers MC. Schließlich verlaufen zwischen dem Mikrocomputer MC und der Überwachungseinheit CU IDDQ-Handshake-Leitungen IDDQ-HDSHK, die zur Steuerung der Ruhestrommessung (IDDQ-Messung) des Mikrocomputers MC dienen. Aus der Überwachungseinheit CU führen sogenannte Abschaltpfade 3 zu externen Warnlampen und/oder Relais zum Manipulieren der zu steuerenden sicherheitskritischen Anwendungen, je nachdem, ob die Überwachungseinheit CU einen Fehler des Mikrocomputers MC detektiert oder nicht. Die Peripherieschaltungen IO weisen Verbindungsleitungen 4 zu der zu steuernden sicherheitskritischen Anwendung 5 auf.

Nach dem Einschalten des Steuergeräts 1 wird zur Funktionsüberprüfung des Mikrocomputers MC eine Ruhestrommessung durchgeführt. Während des Betriebs des Steuergeräts 1 wird die Funktion des Mikrocomputers MC überprüft, indem er regelmäßig mit Testdatensätzen beaufschlagt wird und das entsprechende zweite Testdatenausgangssignal des MC mit einem von der Überwachungseinheit CU berechneten fehlerfreien ersten Testdatenausgangssignal verglichen wird.

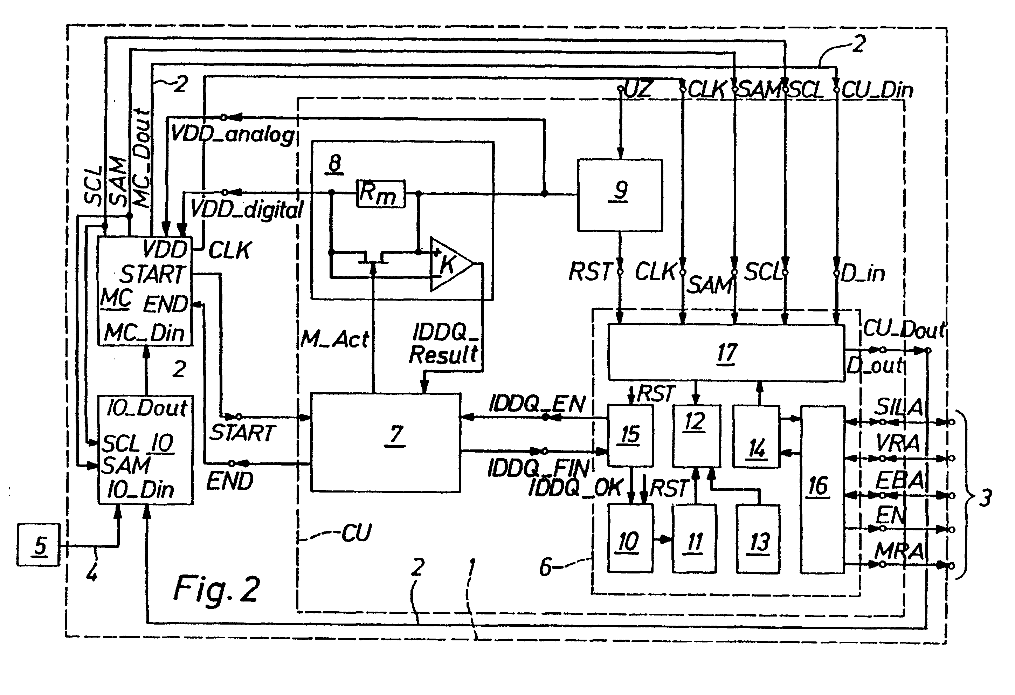

In Fig. 2 ist ein detailliertes Übersichtsblockschaltbild des Steuergeräts 1 aus Fig. 1 dargestellt. Die Überwachungseinheit CU umfasst eine Steuerung 6 der Überwachungseinheit CU, eine Messablaufsteuerung 7 für die IDDQ-Messung, eine IDDQ-Messschaltung 8 und eine Spannungversorgung 9.

Die Steuerung 6 der Überwachungseinheit CU umfasst einen Testdatensignalgenerator 10, einen Antwortgenerator 11 und einen Vergleicher 12. Mit Hilfe des Testdatensignalgenerators 10 wird der Mikrocomputer MC mit einem Testdateneingangssignal beaufschlagt und ermittelt in Abhängigkeit von dem Testdateneingangssignal und von seinen internen Zuständen ein zweites Testdatenausgangssignal. Der Antwortgenerator 11 verarbeitet dasselbe Testdateneingangssignal und bildet ein entsprechendes erstes Testdatenausgangssignal. In dem Vergleicher 12 wird das erste Testdatenausgangssignal der Überwachungseinheit CU mit dem zweiten Testdatenausgangssignal des Mikrocomputers MC verglichen. Ein Triggergenerator 13 ermittelt den Zeitpunkt, zu dem das zweite Testdatenausgangssignal des Mikrocomputers MC bei fehlerfrei arbeitendem Mikrocomputer MC an dem Vergleicher 12 anliegt.

Die Steuerung 6 der Überwachungseinheit CU weist darüber hinaus einen Fehlerzähler 14 auf, der einen Fehler zählt, falls das zweite Testdatenausgangssignal des Mikrocomputers MC nicht mit dem ersten Testdatenausgangssignal der Überwachungseinheit CU übereinstimmt und/oder falls das zweite Testdatenausgangssignal des Mikrocomputers MC zu einem anderen als zu dem von dem Triggergenerator 13 ermittelten Zeitpunkt an dem Vergleicher 12 anliegt.

Des weiteren weist die Steuerung 6 der Überwachungseinheit CU ein Testdatenregister 17 auf, das zum Senden und Empfangen der Testdaten dient.

Die Steuerung 6 der Überwachungseinheit CU weist schließlich auch eine Initialisierungsschaltung 15 auf, die nach dem Einschalten des Steuergeräts 1 von der Spannungsversorgung 9 ein Initialisierungssignal RST erhält, und danach die Überwachungseinheit CU mit dem Mikrocomputer MC synchronisiert, indem sie auf die erste Datenübertragung des MC wartet. Danach aktiviert die Initialisierungsschaltung 15 den Testdatensignalgenerator 10 und den Fehlerzähler 14.

In dem Testdatensignalgenerator 10 werden die Testdateneingangssignale für den Mikrocomputer MC in einer quasi-zufälligen Reihenfolge durch ein rückgekoppeltes Schieberegister generiert. Zu jedem Testdateneingangssignal wird in dem Antwortgenerator 11 mit Hilfe des "Reed-Muller-Codes" die Bit-Folge für das entsprechende erste Testdatenausgangssignal gebildet. Dieser Code wird angewendet, um einen größtmöglichen Abstand im Zahlenraum der Testdatenausgangssignale (Hamming-Distanz) zu erhalten. In dem Vergleicher 12 wird dann das in dem Antwortgenerator 11 ermittelte erste Testdatenausgangssignal mit dem tatsächlichen zweiten Testdatenausgangssignal des Mikrocomputers MC verglichen.

Der Zeitpunkt des Vergleichs wird durch den Triggergenerator 13 vorgegeben. Dies stellt sicher, dass die Zeitscheiben in dem Mikrocomputer MC richtig ablaufen. Der Vergleicher 12 prüft das zweite Testdatenausgangssignal des MC nicht nur auf den richtigen Datenwert hin, sondern auch, ob das Testdatenausgangssignal innerhalb eines bestimmten Zeitfensters übertragen wird. Sind Wert und Zeitpunkt des zweiten Testdatenausgangssignals des MC richtig, wird der Fehlerzähler 14 dekrementiert und über ein Signal-Interface 16 die zu steuernde sicherheitskritische Anwendung im aktiven Zustand gehalten, indem externe Warnlampen ausgeschaltet und Relais zum Ansteuern der Anwendung 5 aktiviert werden.

In jedem auf diesen ersten Zyklus folgenden Zyklus muss der Zeitpunkt und der Wert des zweiten Testdatenausgangssignals des MC richtig sein, um ein sofortiges Ansprechen des Fehlerzählers 14 zu verhindern. Der Fehlerzähler 14 hat mehrere Ansprechschwellen, um ein Abschalten des Steuergeräts 1 bzw. der Anwendung 5 bei einer einmaligen Störung zu verhindern und um eine Prüfung des Abschaltpfades durch den Mikrocomputer MC zu ermöglichen. Die erste Stufe sperrt die Ventilendstufen durch das Signal EN und schaltet die Spannungsversorgung der Ventile über das Ventilrelais VRA aus. Die Anzeige der Warnlampen SILA wird um einen Zyklus verzögert, damit beim Testen des Abschaltpfades keine Anzeige erfolgt.

Wird ein Testdateneingangssignal zum falschen Zeitpunkt oder mit einem falschen Wert beantwortet, wird der Mikrocomputer MC mit demselben Testdateneingangssignal nochmals beaufschlagt, bis der Zeitpunkt und der Wert richtig sind. Tritt dies innerhalb einer vordefinierten Zeit nicht ein, schaltet die Überwachungseinheit CU das Steuergerät 1 ab und kann auch durch richtige Antworten nicht mehr aktiviert werden.

Die Ruhestrommessung wird nach dem Einschalten des Steuergeräts 1 für eine feste Anzahl (typischerweise 8 bis 16) von Zeitpunkten eines Testprogramms durchgeführt. Die Kommunikation zwischen Mikrocomputer MC und Überwachungseinheit CU zur Ruhestrommessung erfolgt über die zwei Handshake-Leitungen START und END. Während der Ruhestrommessung hält der Mikrocomputer MC den Zeittaktgeber CLK an. Zwischen der Überwachungseinheit CU und dem Mikrocomputer MC sind zwei separate Spannungsversorgungsleitungen, VDD_digital zur Versorgung des Digitalteils des Mikrocomputers MC und VDD_analog zur Versorgung des Analogteils des Mikrocomputers MC. Der Ruhestrom wird in der Spannungsversorgungsleitung VDD_digital gemessen.

Die Freigabe der Ruhestrommessung erfolgt nach dem Einschalten der Versorgungsspannung durch das Signal IDDQ_EN der Steuerung 6 der Überwachungseinheit CU. Der erfolgreiche Abschluss der Ruhestrommessung wird durch das Signal IDDQ_FIN an die Steuerung 6 der Überwachungseinheit CU signalisiert. Die Überwachungseinheit CU schaltet dann den Testablauf weiter, indem die Initialisierungsschaltung 15 über ein Signal IDDQ_OK den Testdatensignalgenerator 10 freigibt.

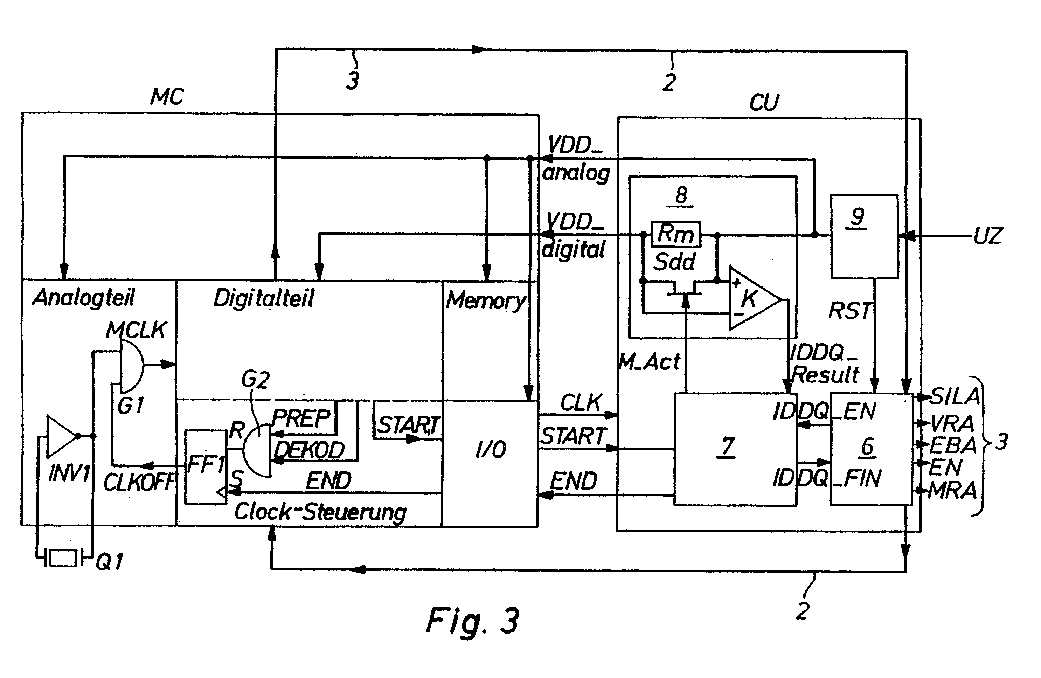

In Fig. 3 ist eine Schaltungsanordnung für die Ruhestrommessung mit einem Zweidraht-Handshake dargestellt. In Fig. 4 ist das Zeitdiagramm der Messablaufsteuerung 7 für die Ruhestrommessung aus Fig. 3 dargestellt. Nach dem Einschalten des Steuergeräts 1 startet der Mikrocomputer MC seinen Selbsttest. Ein Teil dieses Selbsttests ist die Ruhestrommessung. Erreicht der Ablauf im Mikrocomputer MC den Ruhestromtest, wird das Signal START aktiviert. Zum Zeitpunkt T1 wird die Ruhestrommessung durch das Signal M_Act aktiviert. Der Ausgang des Vergleichers 12 für die Ruhestrommessung wird nach der Zeit T2 ausgewertet. Ist der Wert in Ordnung, wird der Mikrocomputer MC durch das END-Signal wieder aktiviert. Liegt der Wert außerhalb eines Grenzwertes, wird die Messung wiederholt. Die Anzahl der Wiederholungen ist vorgegeben. Führt auch die Wiederholung der Messung zu keiner richtigen Antwort, wird die Messung abgebrochen und die Überwachungseinheit CU schaltet den Mikrocomputer MC nicht mehr ein, sondern bleibt in einem Fail-safe-Modus. Wenn alle Ruhestrommessungen abgeschlossen sind, wird das Signal IDDQ_FIN auf HIGH gesetzt. Die Steuerung 6 der Überwachungseinheit CU nimmt daraufhin das Signal IDDQ_EN von HIGH auf LOW zurück.

## Patentansprüche

1. Steuergerät (1) zur Steuerung sicherheitskritischer Anwendungen (5) mit einem Mikrocomputer (MC), einer Überwachungseinheit (CU) und Peripherieschaltungen (IO), **dadurch gekennzeichnet, daß** die Überwachungseinheit (CU) erste Mittel zur Messung des Ruhestroms des Mikrocomputers (MC) aufweist und zwischen den ersten Mitteln der Überwachungseinheit (CU) und dem Microcomputer (MC) mindestens eine Ruhestrom-Handshake-Leitung (IDDQ-HDSHK) zur Steuerung der Messung des Ruhestroms verläuft, und daß die Überwachungseinheit (CU) zweite Mittel zur Beaufschlagung des Microcomputers (MC) mit einem Testdateneingangssignal, zur Verarbeitung des Testdateneingangssignals und zum Vergleich des entsprechenden Testdatenausgangssignals des Microcomputers (MC) mit dem entsprechenden Testdatenausgangssignal der Überwachungseinheit (CU) aufweist und zwischen den zweiten Mitteln der Überwaschungseinheit (CU) und dem Microcomputer (MC) mindestens eine Testdatensignal-Übertragungsleitung verläuft.

2. Steuergerät (1) nach Anspruch 1, **dadurch gekennzeichnet, daß** die ersten Mittel eine Ruhestrom (IDDQ)-Meßschaltung (8), eine Spannungsversorgung (9), eine Ruhestrom (IDDQ)-Meßablaufsteuerung (MAS) (7) und eine Steuerung (6) der CU umfassen und daß die Verbindung zwischen den ersten Mitteln und dem MC zwei Handshake-Leitungen (START, END), die von der Ruhestrom-Meßablaufsteuerung (IDDQ-MAS) zu dem MC verlaufen, und mindestens eine Spannungsversorgungsleitung (VDD), die von der Spannungsversorgung (9) zu dem MC verlaufen, umfaßt, wobei zumindest eine der Spannungsversorgungsleitungen (VDD) über die Ruhestrom (IDDQ)-Meßschaltung (8) verläuft.

3. Steuergerät (1) nach Anspruch 2, **dadurch gekennzeichnet, daß** zwischen der Spannungsversorgung (9) und dem Microcomputer (MC) zwei Spannungsversorgungsleitungen (VDD_analog, VDD_digital) verlaufen, wobei eine Spannungsversorgungsleitung (VDD_digital) über die IDDQ-Meßschaltung (8) verläuft.

4. Steuergerät (1) nach Anspruch 1, **dadurch gekennzeichnet, daß** die ersten Mittel eine Ruhestrom (IDDQ)-Meßschaltung (8), eine Spannungsversorgung (9), eine Ruhestrom (IDDQ)-Meßablaufsteuerung (MAS) (7) und eine Steuerung (6) des Microcomputers (CU) umfassen und daß die Verbindung zwischen den ersten Mitteln und dem MC vier Handshake-Leitungen (START, END, CLK, PWR_DN), die von der Ruhestrom-Meßablaufsteuerung (IDDQ-MAS) (7) zu dem MC verlaufen, und mindestens eine Spannungsversorgungsleitung (VDD), die von der Spannungsversorgung (9) zu dem Microcomputer (MC) verlaufen, umfaßt, wobei zumindest eine der Spannungsversorgungsleitungen (VDD) über die Ruhestrom (IDDQ)-Meßschaltung (8) verläuft.

5. Steuergerät (1) nach einem der Ansprüche 2 bis 4, **dadurch gekennzeichnet, daß** die ersten Mittel eine Initialisierungsschaltung (15) aufweisen, die nach dem Einschalten des Steuergeräts (1) von der Spannungsversorgung (9) ein Initialisierungssignal (RST) erhält und danach zur Freigabe der Ruhestrom (IDDQ)-Messung ein Freigabe-Signal (IDDQ_EN) an die Ruhestrom-Meßablaufsteuerung (IDDQ-MAS) (7) sendet.

6. Steuergerät (1) nach einem der Ansprüche 1 bis 5, **dadurch gekennzeichnet, daß** die zweiten Mittel einen Testdatensignalgenerator (10) zur Beaufschlagung des Microcomputers (MC) mit einem Testdateneingangssignal, einen Antwortgenerator (11) zur Verarbeitung des Testdateneingangssignals und zur Bildung eines entsprechenden Testdatenausgangssignals, ein Testdatenregister (17) zum Senden und Empfangen der Testdaten und einen Vergleicher (12) zum Vergleich des Testdatenausgangssignals des Microcomputers (MC) mit dem Testdatenausgangssignal der Überwachungseinheit (CU) umfassen und daß die Verbindung zwischen den zweiten Mitteln und dem Microcomputer (MC) mindestens eine Testdatenübertragungsleitung umfasst, die zwischen dem Testdatenregister (17) und dem Microcomputer (MC) verläuft.

7. Steuergerät (1) nach Anspruch 6, **dadurch gekennzeichnet, daß** die Verbindung zwischen den zweiten Mitteln und dem Microcomputer (MC) zwei Testdatenübertragungsleitungen (CU_Dout, CU_Din) umfasst.

8. Steuergerät (1) nach Anspruch 6 oder 7, **dadurch gekennzeichnet, daß** die zweiten Mittel einen Triggergenerator (13) aufweisen, der den Zeitpunkt ermittelt, zu dem das Testdatenausgangssignal des Microcomputers (MC) bei fehlerfreiem Microcomputer (MC) an dem Vergleicher (12) anliegt.

9. Steuergerät (1) nach einem der Ansprüche 6 bis 8, **dadurch gekennzeichnet, daß** die zweiten Mittel einen Fehlerzähler (14) aufweisen, der einen Fehler zählt, falls das Testdatenausgangssignal des Microcomputers (MC) nicht mit dem Testdatenausgangssignal der Überwachungseinheit (CU) übereinstimmt und/oder falls das Testdatenausgangssignal des Microcomputers (MC) zu einem anderen als zu dem von dem Triggergenerator (13) ermittelten Zeitpunkt an dem Vergleicher (12) anliegt.

10. Steuergerät (1) nach Anspruch 9, **dadurch gekennzeichnet, daß** der Fehlerzähler (14) mehrere Ansprechschwellen hat, deren Überschreiten jeweils eine unterschiedliche Reaktion zur Folge hat.

11. Steuergerät (1) nach einem der Ansprüche 6 bis 10, **dadurch gekennzeichnet, daß** die zweiten Mittel eine

12. Verfahren zum Überprüfen eines Mikrocomputers (MC) eines Steuergerätes (1) zur Steuerung sicherheitskritischer Anwendungen, das den Mikrocomputer (MC), eine Überwachungseinheit (Check Unit, CU) und Peripherieschaltungen (Input Output, IO) aufweist, **gekennzeichnet durch**
- eine Messung des Ruhestroms des Mikrocomputers (MC), wobei die Messung des Ruhestroms **durch** die Überwachungseinheit (CU) gesteuert wird und dazu wenigstens ein Handshake-Signal (IDDQ-EN, IDDQ-FIN) zwischen dem Mikrocomputer (MC) und der Überwachungseinheit (CU) ausgetauscht wird und
- eine Beaufschlagung des Microcomputers (MC) mit einem Testdateneingangssignal,
- ein Bestimmen eines ersten Testdatenausgangssignals und
- einen Vergleich eines zweiten Testdatenausgangssignals des MC mit dem ersten Testdatenausgangssignal der CU.
Initialisierungsschaltung (15) aufweisen, die nach dem Einschalten des Steuergeräts (1) von der Spannungsversorgun (9) ein Initialisierungssignal (RST) erhält, danach die Überwachungseinheit (CU) mit dem Microcomputer (MC) synchronisiert und danach den Testdatensignalgenerator (10) und den Fehlerzähler (14) aktiviert.

13. Verfahren nach Anspruch 12, **dadurch gekennzeichnet, daß** die Ruhestrommessung als eine Ruhestrom (IDDQ)-Messung ausgebildet ist.

14. Verfahren nach Anspruch 13, **dadurch gekennzeichnet, daß** die Ruhestrom (IDDQ)-Messung nach dem Einschalten des Steuergerätes (1) nach der Freigabe durch ein Freigabesignal (IDDQ_EN) durchgeführt wird.

15. Verfahren nach Anspruch 13 oder 14, **dadurch gekennzeichnet, daß** der Vergleich des zweiten Testdatenausgangssignals des Microcomputers (MC) mit dem ersten Testdatenausgangssignal der Überwachungseinheit (CU) während des Betriebs des Steuergeräts (1) durchgeführt wird.

16. Verfahren nach einem der Ansprüche 13 bis 15, **dadurch gekennzeichnet, daß** während der IDDQ-Messung und/oder während des Vergleichs des zweiten Testdatenausgangssignals des Microcomputers (MC) mit dem ersten Testdatenausgangssignal der Überwachungseinheit (CU) ein Zeittaktgeber (Clock, CLK) durch den Microcomputer (MC) angehalten wird.

17. Verfahren nach einem der Ansprüche 13 bis 16, **dadurch gekennzeichnet, daß** das Testdateneingangssignal der Überwachungseinheit (CU) von einem Testdatensignalgenerator (10) durch ein rückgekoppeltes Schieberegister generiert wird.

18. Verfahren nach Anspruch 17, **dadurch gekennzeichnet, daß** das Testdatenausgangssignal der Überwachungseinheit (CU) von einem Antwortgenerator (11) mit Hilfe des Reed-Muller-Codes generiert wird.

## Claims

1. Control unit (1) for controlling safety-critical applications (5) having a microcomputer (MC), a check unit (CU) and peripheral circuits (IO), **characterized in that** the check unit (CU) has first means for measuring the quiescent current in the microcomputer (MC), and a quiescent-current handshake line (IDDQ-HDSHK) for controlling measurement of the quiescent current runs between the first means in the check unit (CU) and the microcomputer (MC), and **in that** the check unit (CU) has second means for applying a test data input signal to the microcomputer (MC), for processing the test data input signal and for comparing the corresponding test data output signal from the microcomputer (MC) with the corresponding test data output signal from the check unit (CU), and at least one test data signal transmission line runs between the second means in the check unit (CU) and the microcomputer (MC).

2. Control unit (1) according to Claim 1, **characterized in that** the first means comprise a quiescent-current (IDDQ) measurement circuit (8), a voltage supply (9), a quiescent-current (IDDQ) measurement flow controller (MAS) (7) and a controller (6) for the CU, and **in that** the connection between the first means and the MC comprises two handshake lines (START, END), which run from the quiescent-current measurement flow controller (IDDQ-MAS) to the MC, and at least one voltage supply line (VDD), which run from the voltage supply (9) to the MC, at least one of the voltage supply lines (VDD) running via the quiescent-current (IDDQ) measurement circuit (8).

3. Control unit (1) according to Claim 2, **characterized in that** two voltage supply lines (VDD_analog, VDD_digital) run between the voltage supply (9) and the microcomputer (MC), with one voltage supply line (VDD_digital) running via the IDDQ measurement circuit (8).

4. Control unit (1) according to Claim 1, **characterized in that** the first means comprise a quiescent-current (IDDQ) measurement circuit (8), a voltage supply (9), a quiescent-current (IDDQ) measurement flow controller (MAS) (7) and a controller (6) for the check unit (CU), and **in that** the connection between the first means and the MC comprises four handshake lines (START, END, CLK, PWR_DN), which run from the quiescent-current measurement flow controller (IDDQ-MAS) (7) to the MC, and at least one voltage supply line (VDD), which run from the voltage supply (9) to the microcomputer (MC), at least one of the voltage supply lines (VDD) running via the quiescent-current (IDDQ) measurement circuit (8).

5. Control unit (1) according to one of Claims 2 to 4, **characterized in that** the first means have an initialization circuit (15) which, when the control unit (1) has been turned on by the supply voltage (9), receives an initialization signal (RST) and then sends an enable signal (IDDQ_EN) to the quiescent-current measurement flow controller (IDDQ-MAS) (7) in order to enable quiescent-current (IDDQ) measurement.

6. Control unit (1) according to one of Claims 1 to 5, **characterized in that** the second means comprise a test data signal generator (10) for applying a test data input signal to the microcomputer (MC), a response generator (11) for processing the test data input signal and for forming a corresponding test data output signal, a test data register (17) for sending and receiving the test data, and a comparator (12) for comparing the test data output signal from the microcomputer (MC) with the test data output signal from the check unit (CU), and **in that** the connection between the second means and the microcomputer (MC) comprises at least one test data transmission line which runs between the test data register (17) and the microcomputer (MC).

7. Control unit (1) according to Claim 6, **characterized in that** the connection between the second means and the microcomputer (MC) comprises two test data transmission lines (CU_Dout, CU_Din).

8. Control unit (1) according to Claim 6 or 7, **characterized in that** the second means have a trigger generator (13) which ascertains the time at which the test data output signal from the microcomputer (MC) reaches the comparator (12) when the microcomputer (MC) is free from error.

9. Control unit (1) according to one of Claims 6 to 8, **characterized in that** the second means have an error counter (14) which counts an error if the test data output signal from the microcomputer (MC) does not match the test data output signal from the check unit (CU) and/or if the test data output signal from the microcomputer (MC) reaches the comparator (12) at a time other than that ascertained by the trigger generator (13).

10. Control unit (1) according to Claim 9, **characterized in that** the error counter (14) has a plurality of addressing thresholds which, when exceeded, each result in a different reaction.

11. Control unit (1) according to one of Claims 6 to 10, **characterized in that** the second means have an initialization circuit (15) which, when the control unit (1) has been turned on by the voltage supply (9), receives an initialization signal (RST), then synchronizes the check unit (CU) with the microcomputer (MC), and then activates the test data signal generator (10) and the error counter (14).

12. Method for checking a microcomputer (MC) in a control unit (1) for controlling safety-critical applications which has the microcomputer (MC), a check unit (CU) and peripheral circuits (Input Output, IO),
**characterized by**
- measurement of the quiescent current in the microcomputer (MC), where the measurement of the quiescent current is controlled by the check unit (CU), and, to this end, at least one handshake signal (IDDQ-EN, IDDQ-FIN) is exchanged between the microcomputer (MC) and the check unit (CU), and
- application of a test data input signal to the microcomputer (MC),
- determination of a first test data output signal, and
- comparison of a second test data output signal from the MC with the first data output signal from the CU.

13. Method according to Claim 12, **characterized in that** the quiescent-current measurement is in the form of a quiescent-current (IDDQ) measurement.

14. Method according to Claim 13, **characterized in that** the quiescent-current (IDDQ) measurement is performed when enabled by an enable signal (IDDQ_EN) after the control unit (1) has been turned on.

15. Method according to Claim 13 or 14, **characterized in that** the comparison between the second test data output signal from the microcomputer (MC) and the first test data output signal from the check unit (CU) is performed during operation of the control unit (1).

16. Method according to one of Claims 13 to 15, **characterized in that**, during the IDDQ measurement and/or during the comparison between the second test data output signal from the microcomputer (MC) and the first test data output signal from the check unit (CU), a clock generator (Clock, CLK) is stopped by the microcomputer (MC).

17. Method according to one of Claims 13 to 16, **characterized in that** the test data input signal for the check unit (CU) is generated by a test data signal generator (10) using a shift register with feedback.

18. Method according to Claim 17, **characterized in that** the test data output signal from the check unit (CU) is generated by a response generator (11) using the Reed-Muller code.

## Revendications

1. Appareil de commande (1) pour commander des applications (5) cruciales pour la sécurité, comprenant un micro-ordinateur (MC), une unité de surveillance (CU) et des périphériques (IO),
**caractérisé en ce que**
l'unité de surveillance (CU) comprend des premiers moyens pour mesurer le courant de repos du micro-ordinateur (MC) et entre les premiers moyens de l'unité de surveillance (CU) et le micro-ordinateur (MC) il y a au moins une ligne de liaison de courant de repos (IDDQ_HDSHK) pour commander la mesure du courant de repos, et
l'unité de surveillance (CU) comprend des seconds moyens pour appliquer au micro-ordinateur (MC) un signal d'entrée de données de contrôle, pour traiter le signal d'entrée de données de contrôle et pour comparer le signal de sortie de données de contrôle correspondant du micro-ordinateur (MC) avec le signal de sortie de données de contrôle correspondant de l'unité de surveillance (CU), et entre les seconds moyens de l'unité de surveillance (CU) et le micro-ordinateur (MC), il y a au moins une ligne de transmission de signal de données de contrôle.

2. Appareil de commande (1) selon la revendication 1,
**caractérisé en ce que**
les premiers moyens comprennent un circuit de mesure (8) pour le courant de repos (IDDQ), une alimentation en tension (9), une commande de déroulement de mesure de courant de repos (IDDQ) (MAS) (7) et une commande (6) de l'unité de surveillance (CU), et la liaison entre les premiers moyens et le micro-ordinateur (MC) est assurée par deux lignes de dialogue (DEPART, FIN), reliant la commande de déroulement de mesure de courant de repos (IDDQ-MAS) au micro-ordinateur (MC) et au moins une ligne d'alimentation en tension (VDD) qui relie l'alimentation en tension (9) au micro-ordinateur (MC), et
au moins l'une des lignes d'alimentation en tension (VDD) passe par le circuit de mesure de courant de repos (IDDQ) (8).

3. Appareil de commande (1) selon la revendication 2,
**caractérisé par**
deux lignes d'alimentation en tension (VDD_analog, VDD_digital) entre l'alimentation en tension (9) et le micro-ordinateur (3) (MC),
une ligne d'alimentation en tension (VDD_digital) passant par le circuit de mesure (IDDQ), (8).

4. Appareil de commande (1) selon la revendication 1,
**caractérisé en ce que**
les premiers moyens comprennent un circuit de mesure de courant de repos (8) (IDDQ), une alimentation en tension (9), une commande de déroulement de mesure de courant de repos (MAS) (7), (IDDQ) et une commande (6) de l'unité de surveillance (CU), et la liaison entre les premiers moyens et le micro-ordinateur (MC) comprend quatre lignes de dialogue (DEPART, FIN, CLK, PWR_DN), reliant la commande de déroulement de mesure de courant de repos (IDDQ-MAS) (7) au micro-ordinateur (MC) et au moins une ligne d'alimentation en tension (VDD) allant de l'alimentation en tension (9) au micro-ordinateur (MC), et
au moins l'une des lignes d'alimentation en tension (VDD) passe par le circuit de mesure de courant de repos (IDDQ) (8).

5. Appareil de commande (1) selon l'une quelconque des revendications 2 à 4,
**caractérisé en ce que**
les premiers moyens comprennent un circuit d'initialisation (15) qui après le branchement de l'appareil de commande (1) reçoit un signal d'initialisation (RST) de l'alimentation en tension (9) et qui envoie ensuite un signal de libération (IDDQ_EN) à la commande de déroulement de mesure de courant de repos (IDDQ-MAS) (8) pour libérer la mesure du courant de repos (IDDQ).

6. Appareil de commande (1) selon l'une quelconque des revendications 1 à 5,
**caractérisé en ce que**
les seconds moyens comportent un générateur de signal de données de contrôle (10) pour appliquer au micro-ordinateur (MC) un signal d'entrée de données de contrôle, un générateur de réponse (11) pour traiter le signal d'entrée de données de contrôle et pour former un signal de sortie de données d'essai correspondant, un registre de données d'essai (17) pour envoyer et recevoir des données de contrôle et un comparateur (12) pour comparer le signal de sortie de données d'essai du micro-ordinateur (MC) avec le signal de sortie de données d'essai de l'unité de surveillance (CU), et la liaison entre les seconds moyens et le micro-ordinateur (MC) comprend au moins une ligne de transmission de données de contrôle entre le registre de données de contrôle (17) et le micro-ordinateur (MC).

7. Appareil de commande (1) selon la revendication 6,
**caractérisé en ce que**
la liaison entre les seconds moyens et le micro-ordinateur (MC) comprend deux lignes de transmission de données de contrôle (CU_Dout, CU_Din).

8. Appareil de commande (1) selon l'une quelconque des revendications 6 ou 7,
**caractérisé en ce que**
les seconds moyens comprennent un générateur de déclenchement (13) qui détermine l'instant auquel le signal de sortie de données de contrôle du micro-ordinateur (MC) appliqué au comparateur (12) correspond à un micro-ordinateur (MC) sans défaut.

9. Appareil de commande (1) selon l'une quelconque des revendications 6 à 8,
**caractérisé en ce que**
les seconds moyens comportent un compteur de défaut (14) qui compte un défaut si le signal de sortie de données de contrôle du micro-ordinateur(MC) ne concorde pas avec le signal de sortie de données de contrôle de l'unité de surveillance (CU) et/ou au cas où le signal de sortie de données de contrôle du micro-ordinateur (MC) est appliqué au comparateur (12) à un autre instant que celui déterminé par le générateur de déclenchement (13).

10. Appareil de commande (1) selon la revendication 9,
**caractérisé en ce que**
le compteur de défaut (14) présente plusieurs seuils de mise en oeuvre dont le dépassement produit chaque fois une réaction différente.

11. Appareil de commande (1) selon l'une quelconque des revendications 6 à 10,
**caractérisé en ce que**
les seconds moyens comprennent un circuit d'initialisation (15) qui, après le branchement de l'appareil de commande (1) reçoit de l'alimentation en tension (9) un signal d'initialisation RST, et ensuite l'unité de surveillance (CU) est synchronisée avec le micro-ordinateur (MC) et ensuite active le générateur de signal de données de contrôle (10) et le compteur de défaut (14).

12. Procédé de contrôle d'un micro-ordinateur (MC) d'un appareil de commande (1) pour commander des applications cruciales pour la sécurité, comportant un micro-ordinateur (MC), une unité de surveillance (unité de contrôle CU) et des périphériques (entrée, sortie, IO),
**caractérisé par**
- une mesure du courant de repos du micro-ordinateur (MC), cette mesure du courant de repos étant commandée par une unité de surveillance (CU) et pour cela il est prévu au moins l'échange d'un signal de dialogue (IDDQ_EN, IDDQ_FIN) entre le micro-ordinateur (MC) et l'unité de surveillance (CU), et
- l'application d'un signal d'entrée de données de contrôle au micro-ordinateur (MC),
- la détermination d'un premier signal de sortie de données de contrôle, et
- une comparaison d'un second signal de sortie de données de contrôle du micro-ordinateur avec le premier signal de sortie de données de contrôle de l'unité de surveillance.

13. Procédé selon la revendication 12,
**caractérisé en ce que**
la mesure du courant de repos est une mesure de courant de repos (IDDQ).

14. Procédé selon la revendication 13,
**caractérisé en ce que**
la mesure de courant de repos (IDDQ) est effectuée après le branchement de l'appareil de commande (1) et la libération par un signal de libération (IDDQ_EN).

15. Procédé selon l'une quelconque des revendications 13 ou 14,
**caractérisé en ce qu'**
on effectue la comparaison du second signal de sortie de données de contrôle du micro-ordinateur (MC) et du premier signal de sortie de données de contrôle de l'unité de surveillance (CU) pendant le fonctionnement de l'appareil de commande (1).

16. Procédé selon l'une quelconque des revendications 13 à 15,
**caractérisé en ce que**
pendant la mesure (IDDQ) et/ou pendant la comparaison du second signal de sortie de contrôle du micro-ordinateur (MC) avec le premier signal de sortie de contrôle de l'unité de surveillance (CU), le micro-ordinateur (MC) arrête un générateur d'horloge (Clock, CLK).

17. Procédé selon l'une des revendications 13 à 15,
**caractérisé en ce que**
le signal d'entrée de contrôle de l'unité de surveillance (CU) est générée par un registre à décalage couplé en réaction d'un générateur de signal de contrôle (10).

18. Procédé selon la revendication 17,
**caractérisé en ce que**
le signal de contrôle de sortie de contrôle de l'unité de surveillance (CU) est généré par un opérateur de régime (11) à l'aide du code Reed-Muller.
